# EUROPÄISCHE PATENTANMELDUNG

(11) **EP 2 145 785 A1**
(43) Veröffentlichungstag der Anmeldung: **20.01.2010**
(21) Anmeldenummer: 09164514.3
(22) Anmeldetag: 03.07.2009
(51) Int. Cl.: B60H 1/00

(54) **Klappe für eine Fahrzeug-Klimaanlage**

(30) Priorität: 18.07.2008 DE 102008033882
(71) Anmelder: Behr GmbH & Co. KG, 70469 Stuttgart (DE)
(72) Erfinder: Komowski, Michael, 71263, Weil der Stadt (DE)

(57) **Zusammenfassung**

Die Erfindung betrifft eine Klappe aufweisend eine Schwenkachse (S) und mindestens eine Klappenfläche, die sich von der Schwenkachse (S) aus erstreckt und zwei einander gegenüberliegende Flachen hat, wobei die Klappe (9a) ferner mindestens eben, insbesondere bevorzugt jedoch eine Mehrzahl von Durchbrüchen (12) aufweist, welche Verbindungswege zwischen den beiden Klappenflächen bilden. Bevorzugt sind zusätzliche Führungsstrukturen, insbesondere Rippen (11), vorgesehen.

## Beschreibung

Die Erfindung betrifft eine Klappe, insbesondere eine Restaufwärmungsklappe für eine Fahrzeug-Klimaanlage, gemäß dem Oberbegriff des Anspruches 1.

Bei Fahräleug-Klimaanlagen sind häufig Klappen zwischen dem Verdampfer und dem nachfolgend angeordneten Heizer vorgesehen, welche im reinen Kühlbetrieb ein Einströmen von Luft in den Heizer verhindern, Hierbei kann auch auf der Rückseite des Heizers eine weitere Klappe angeordnet sein, weiche im reinen Kühlbetrieb ein Rückströmen von Luft aus dem Mischraum verhindert, Insbesondere bei Klimaanlagen mit geringen Abständen zwischen Verdampfer und Heizer kann es zu Problemen in Bezug auf die Abführung des sich im Verdampfer bildenden und sammelnden Kondenswassers kommen. So nimmt der Luftstrom, welcher den Verdampfer durchströmt, einen Teil des Kondenswassers zumindest ein Stück weit mit, wodurch es in den Bereich des Heizers gelangen kann, was zu einer Dampfbildung im Heizer führen kann und unerwünscht ist.

Für das Abführen von sich im Gehäuse der Klimaanlage sammelndem Kondenswasser ist aus der DE 36 23 185 C2 die Verwendung einer perforierten Abdeckplatte am Boden des Gehäuses bekannt, welche eine Wanne mit Ablaufstutzen abdeckt.

Die US 7,197,885 B2 offenbart eine Trennwand mit Rippen für die Führung von sich an der Trennwand sammelndem Kondenswasser, welches schwerkraftgefördert entlang der Rippen nach unten fließt.

Es ist Aufgabe der Erfindung, eine verbesserte Klappe zur Verfügung zu stellen.

Diese Aufgabe wird gelöst durch eine Klappe mit den Merkmalen des Anspruches 1. Vorteilhafte Ausgestaltungen sind Gegenstand der Unteratispruche.

Erfindungsgemäß ist eine Klappe vorgesehen, aufweisend eine Schwenkachse und mindestens eine Klappenfläche, die sich von der Schwenkachse aus erstreckt und zwel einander gegenüberliegende Flächen hat, wobei die Klappe mindestens einen, insbesondere bevorzugt jedoch eine Mehrzahl von Durchbrüchen aufweist, wobei jeder der Ourchbruche einen Verbindutigsweg zwischen den beiden Klappenfläclien bildet. Über diese Verbindungswege wird es beispielsweise Spritzwasser ermöglicht, von einer Fläche der Klappenfläche an die andere Fläche der Klappenfläche zu gelangen, von wo aus das Spritzwasser nach unten tropfen kann, so dass es nicht weiter vom Luftstrom mitgenommen und insbesondere nicht in Bereiche gelangt, welche in Luftströmungsnchtung der Klappe angeordnet sind, also beispielsweise in einen Heizbereich.

Besonders bevorzugt ist eine Mehrzahl von Führungsstrukturen vorgesehen, die zumindest in einem Teilbereich einer der einander gegenüberliegenden Flächen der Klappenfläche angeordnet sind, wobei die Führungsstrukturen dazu dienen, sich sammelnde Flüssigkeit in Richtung der Durchbrüche zu führen.

Insbesondere bevorzugt sind Rippen als Führungsstrukturen vorgesehen, die zumindest in einem Teilbereich einer der einander gegenüberliegenden Flächen der Klappenfläche angeordnet sind, wobei die Durchbrüche zwischen den Rippen angeordnet sind.

Auf einander gegenüberliegenden Flächen der Klappenfläche ist bevorzugt in mindestens einem Bereich eine Mehrzahl von Rippen vorgesehen, insbesondere ist der Bereich ein Klappenflügel oder zumindest ein Endbereich hiervon, welcher zumindest in einzelnen Klappenstellungen in einen Spritzwasserbereich ragt.

Besonders bevorzugt sind die Rippen parallel zueinander und schräg zur Klappenfläche verlaufend angeordnet. Dabei bilden zwei auf gegenüberliegenden Flächen der Klappenfläche angeordnete Rippen bevorzugt eine V-förmige Nut Hierbei ragt die "luftabströmseitige" Rippe weiter nach oben als die "luftanströmseitige" Rippe, so dass beispielsweise Spritzwasser entgegen der mittleren Strömungsrichtung der Luft in Richtung Warmluftpfad von der "Luftabströmseite" in Richtung "Luftanströmseite" mittel Schwerkraft transportiert und von der "Luftanströmseite" aus nach unten abgegeben werden kann.

Die Rippen stehen bevorzugt fischgrätenartig in einem Winkel von 20° bis 70°, vorzugsweise 30° bis 60° und insbesondere 45°+/- 10°, von der Klappenfläche ab, wobei sie sich bevorzugt "luftabströmseitig" nach oben.

Die Rippen, welche bevorzugt die Führungsstrukturen bilden, können auch elastisch ausgebildet sein. Ferner können die Führungsstrukturen ihrerseits klappenartig ausgebildet sein, beispielsweise in Gestalt von Rückschlagklappen, weiche in bestimmten Stellungen oder Betriebszuständen offen und in anderen Stellungen oder Betriebszuständen geschlossen sind, wobei sie gleichzeitig den Durchtritt von Spritzwasser durch die Durchlässe in der Klappenfläche regeln.

Vorzugsweise ist die Klappe zweiflügelig mit zwel unterschiedlich langen Klappenflügeln und zwischen den Klappenflügeln verlaufender Schwenkachse ausgebildet, wobei zumindest an einem der Klappenflügel, insbesondere am größeren Klappenflügel, Durchbrüche vorgesehen sind.

Bevorzugt ist die Klappe zweiflügelig mit zwei unterschiedlich langen Klappenflügeln und zwischen den Klappenflügeln verlaufender Schwenkachse ausgebildet, wobei zumindest an einem der Klappenflügel, insbesondere am größeren Klappenflügel, Rippen vorgesehen sind, welche sich schräg zur Klappenfläche weg von der Schwenkachse der Klappe erstrecken.

Eine derartige Klappe wird vorzugsweise in einer Klimaanlage im Warmluftpfad zwischen Verdampfer und Heizer verwendet. Hierbel schützt sie den Helzbereich vor Spritzwasser. Zudem verhindert sie - ggf. in Verbindung mit einer weiter hinten im Heizbereich angeordneten weiteren Klappe - eine Restautwärmung der vom Verdampfer kommenden Luft im reinen Kühlbetrieb. Die Klappe ist hierbei bevorzugt in zumindest einem Betriebszustand in einen Spritzwasserbereich des Verdampfers ragend angeordnet.

Hierbei ist die Klappe besonders bevorzugt ausechließlich in den Bereichen mit Durchbrüchen versehen, welche in den Spritzwasserbereich des Verdampfers ragen.

Die Klappe kann elastisch oder selbst als Klappen ausgebildete Rippen aufweisen, welche in geöffneter Stellung der Klappe es dem sich an der Klappenfläche und/oder den Rippen sammelnden Spritzwasser ermöglichen, durch die Klappenfläche zu gelangen, um auf der anderen Seite weiter schwerkraftgefördert nach unten an den tiefsten Punkt der entsprechenden Rippe zu gelangen, von dem aus das Spritzwasser abtropfen kann.

Die Rippen können eine im Prinzip beliebige Gestalt aufweisen, so sind beispielsweise bienenwabenförmige Rippen möglich. Insbesondere sind die Durchbrüche, welche eine beliebige Gestalt haben können, in direkter Nachbarschaft mindestens einer Rippe oder ggf, auch von Rippen ganz umgeben. Insbesondere bevorzugt sind auf beiden einander gegenüberliegenden Flächen der Klappenfläche einem Durchbruch Rippen zugeordnet, wobei eine Rippe der Zuführung von Spritzwasser in Richtung Durchbruch und die andere Rippe der Abführung des durch den Durchbruch fließenden Spritzwassers dient.

Im Folgenden wird die Erfindung anhand mehrerer Ausführungsbeispiele, teilweise unter Bezugnahme auf die Zeichnung, im Einzelnen erläutert. Es zeigen:

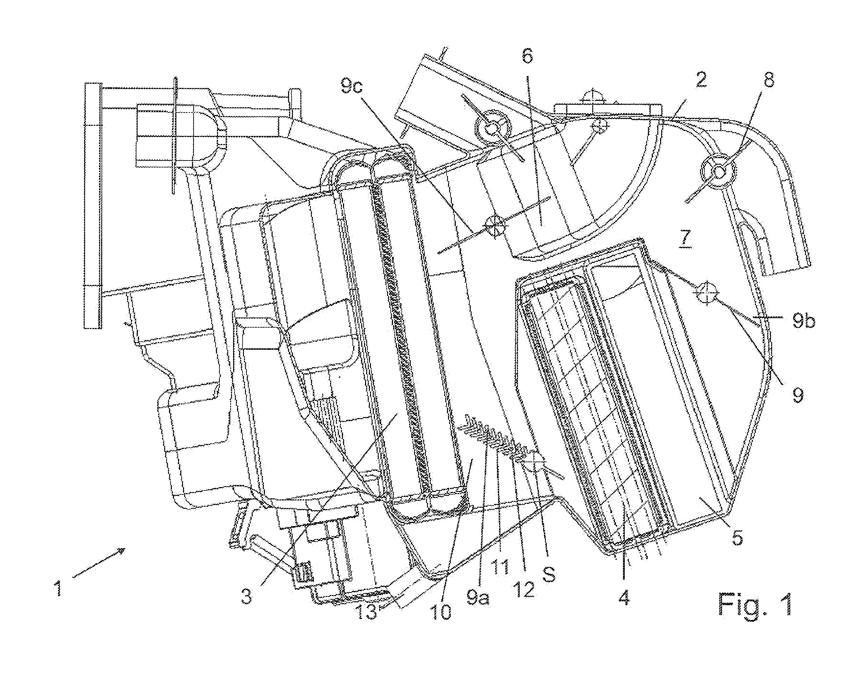

- Fig. 1: einen Längsschnitt durch eine Kraftfahrzeug-Klimaanlage mit einer Klappe gemäß dem ersten Ausführungsbeispiel, wobei die Klimaanlage in in einem Mischbetrieb betrieben wird,
- Fig. 2: eine Fig. 1 entsprechende Darstellung mit die Luftverteilung auf den Kaltluftbypass und den Warmluftpfad andeutenden Pfeilen sowie gestrichelt angedeutetem Spritzwasserbereich,
- Fig. 3: die Klimaanlage von Fig. 2 in einem reinen Kühlbetrieb,
- Fig. 4: eine vergrößerte Darstellung des Bereichs von Fig. 1, in welchern die Klappe angeordnet ist,

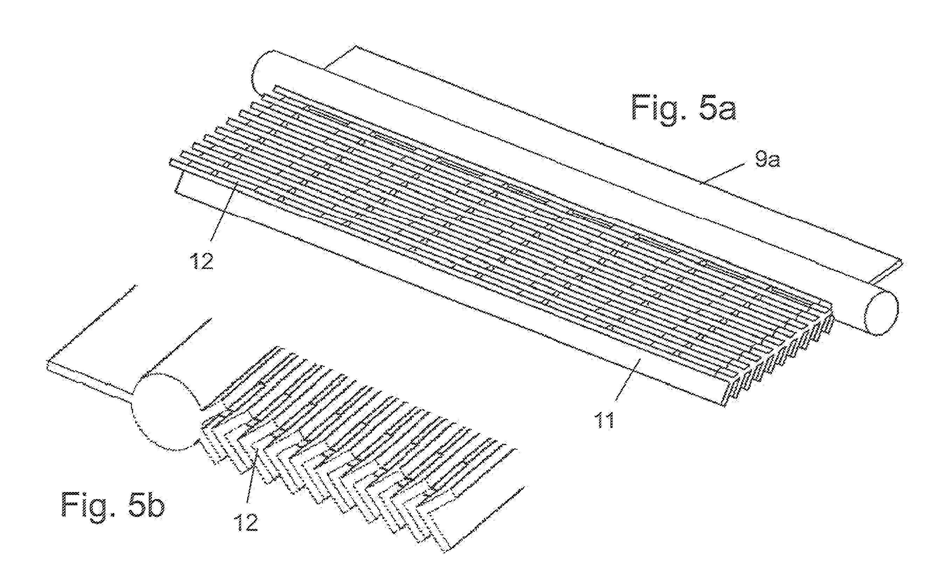

- Fig. 5a: eine perspektivische Darstellung der Klappe gemäß dem ersten Ausführungsbeispiel,
- Fig. 5b: eine ausschnittsweise im vorderen Bereich geschnittene Ansicht der Klappe von Fig. 5a,
- Fig. 6: eine perspektivische Darstellung der Klappe gemäß dem zweiten Ausführungsbeispiel,
- Fig. 7: eine ausschnittsweise Ansicht einer "luftabstromseitigen" Fläche einer Klappe gemäß dem vierten Ausführungsbeispiel,
- Fig. 8: eine perspektivische Ansicht einer Klappe gemäß dem fünften Ausführungsbeispiel,
- Fig. 9: eine andere perspektivische Ansicht der Klappe von Fig. 9,
- Fig. 10: eine perspektivische, geschnittene, ausschnittsweise Ansicht der Klappe von Fig. 9.

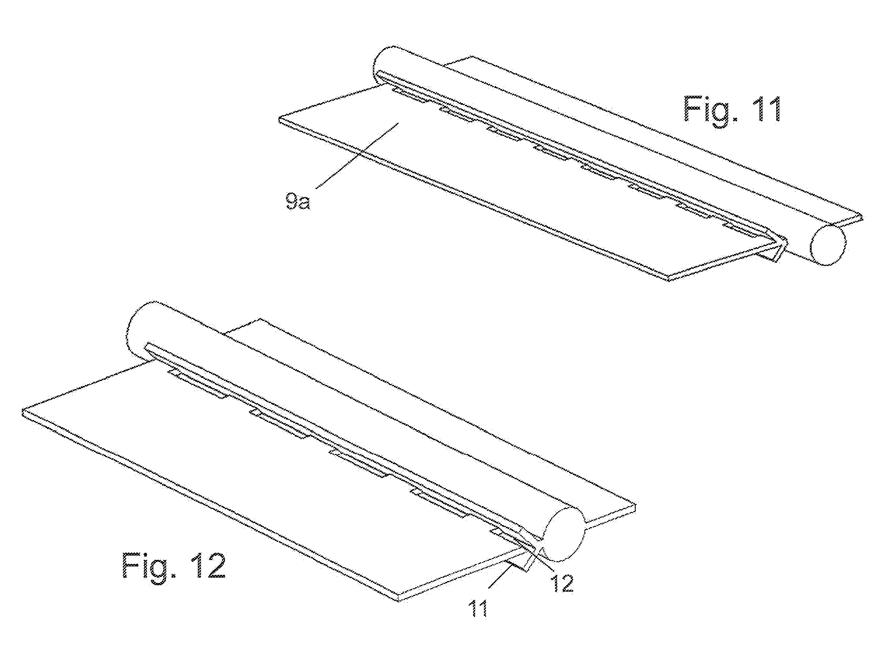

- Fig. 11: eine perspektivische Ansicht einer Klappe gemäß dem sechsten Ausführungsbeispiel,
- Fig. 12: eine geschnittene Darstellung der Klappe von Fig. 11,
- Fig. 13: eine schematische Darstellung der Klappe von Fig. 11 integriert in einer Klimaanlage,
- Fig. 14: eine Detailansicht der Klappe,
- Fig. 15: eine Detailansicht einer Klappe gemäß einer Variante des sechsten Ausführungsbeispiels,
- Fig. 16: eine perspektivische Ansicht einer Klappe gemäß dem siebten Ausführungsbeispiel,
- Fig. 17: eine andere perspektivische Ansicht der Klappe von Fig. 16,
- Fig. 18: eine schematische Darstellung der Klappe in einer geöffneten Stellung von Fig. 16 integriert in einer Klimaanlage,
- Fig. 19: eine Detailansicht des Klappenbereichs,
- Fig. 20: eine schematische Darstellung der Klappe in einer geschlossenen Stellung von Fig. 16 integriert in einer Klimaanlage,
- Fig. 21: eine Detailansicht des Klappenbereichs,
- Fig. 22: eine Variante einer Klappe gemäß dem siebten Ausführungsbeispiel,
- Fig. 23: einen Schnitt durch die Klappe von Fig. 22,
- Fig. 24: eine schematische Darstellung einer Klappe gemäß dem achten Ausführungsbeispiel in geschlossener Stellung integriert in einer Klimaanlage,
- Fig. 25: eine Detaildarstellung des Klapperibereichs von Fig. 24,
- Fig. 26: ehe schematische Darstellung der Klappe von Fig. 24 in geöffneter Stellung,
- Fig, 27: eine Detaildarstellung des Klappenbereichs von Fig. 26,
- Fig. 28: eine perspektivische Darstellung der Klappe von Fig. 24 mit verschbesenen Durchbrüchen,
- Fig. 29: die Klappe von Fig. 28 mit offenen Durchbrüchen,
- Fig. 30: eine Variante des achten Ausführungsbeispiels mit verschlossenen Durchbrüchen,
- Fig. 31: die Klappe von Fig. 30 mit offenen Durchbrüchen,
- Fig. 32: eine perspektivische Darstellung einer Klappe gemäß dem neunten Ausführungsbeispiel, und
- Fig, 33: eine ausschnittsweise Darstellung der Klappe von Fig. 32.

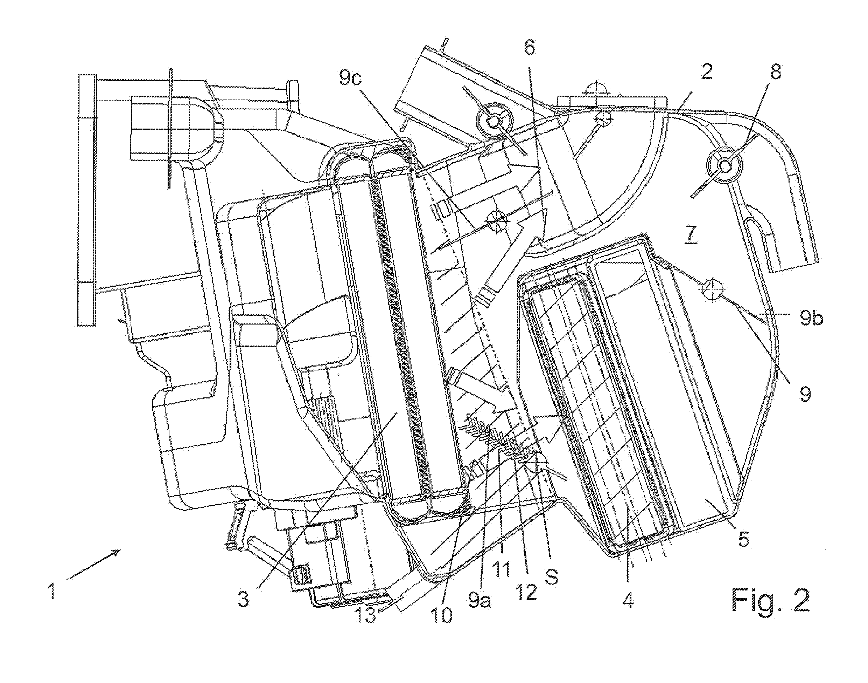

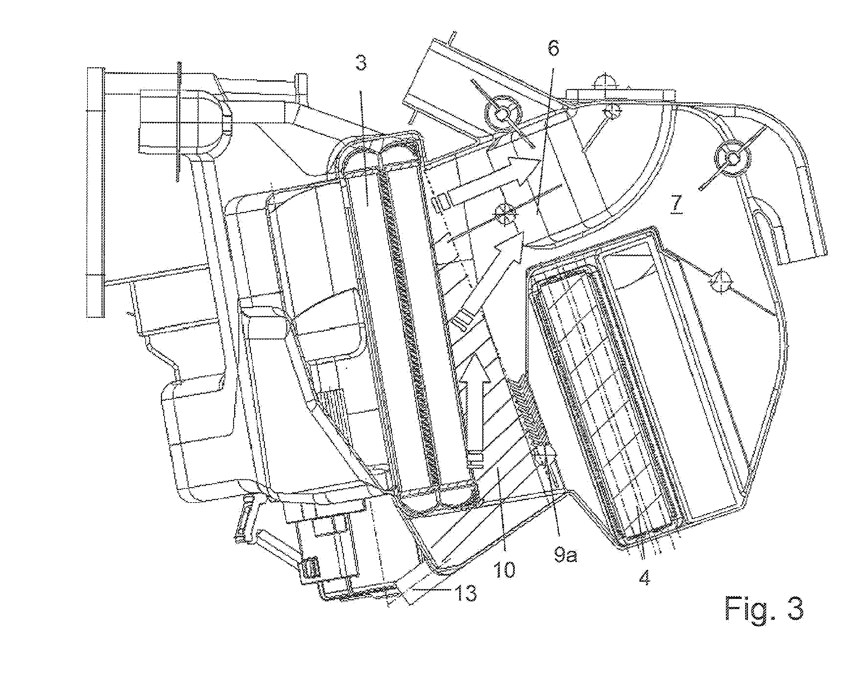

Eine Kraftfahrzeug-Klimaanlage 1 zur Regelung der Temperatur eines dem Fahrzeuginnenraum zuzuführenden Luftstroms weist in einem Gehäuse 2 angeordnet ein Gebläse (nicht dargestellt), einen Verdampfer 3, einen Heizer 4 mit Zuheizer 5, einen Kaltluftbypass 6, einen Mischraum 7 sowie eine Mehrzahl von die Luftverteilung auf Luftkanäle zum Fahrzeuginnenraum regelnden Klappen 8 auf. Ferner Sind vorliegend drei Klappen 9 zur Regelung der Luftverteilung auf Heizer/Zuheizer und Kaltluftbypass vorgesehen, wobei eine erste Klappe 9a vor dem Heizer 4, eine zweite Klappe 9b im Kaltluftbypass 6 und eine dritte Klappe 9c hinter dem Zuheizer 5 angeordnet ist. Die dritte Klappe 9c verhindert im reinen Kühlbetrieb ein Rückströmen von kalter Luft aus dem Mischraum 7 in Richtung Heizer 4, was zu einer Erwärmung derselben führen würde, Zudem verhindert sie ein Durchströmen von Luft durch den Heizer 4 und Zuheizer 5. Die zweite Klappe 9b regelt auf an sich bekannte Weise den Luftstrom durch den Kaltluftbypass 6. Die erste Klappe 9a regelt - vorliegend in Verbindung mit der dritten Klappe 9c - den Luftstrom durch den Heizer 4 und Zuheizer 5. Ferner dient die erste Klappe 9a dem Sammeln und Abführen von Kondenswasser, welches im Luftstrom mitgeführt wird. Der Bereich, in welchem das Kondenswasser mitgeführt wird, wird im Folgenden als Spritzwasserbereich 10 bezeichnet und ist in den Figuren 2 und 3 schraffiert dargestellt. Wie aus Fig. 3 ersichtlich, ist die erste Klappe 9a im geschlossenen Zustand am Rande des Spntzwasserberelchs 10 verlaufend angeordnet Die Schwenkachse S liegt hierbei ebenfalls direkt am Rand des Spritzwasserbereichs 10. Im geöffneten Zustand (siehe Fig. 2) ragt jedoch der größere Flügel der ersten Klappe 9a bis weit in den Spritzwasserbereich 10 hinein, während der kleinere Flügel sich vom Spritzwasserbereich 10 entfernt.

Um das Spritzwasser aus dem Luftstrom zu entfernen und ein Weiterführen in den Bereich des Heizers 4 zu verhindern, ist die erste Klappe 9a am größeren Flügel mit Rippen 11 ausgebildet, welche fischgrätenartig und parallel zueinander auf beiden Seiten der Klappenfläche schräg in einer Richtung weg von der Schwenkachse S der ersten Klappe 9a abstehen. Der Winkel zur Klappenfläche beträgt vorliegend 45°. Der zweite, kleinere Flügel der ersten Klappe 9a, der sich in allen Betriebsstellungen außerhalb des Spritzwasserbereichs 10 befindet, ist vorliegend auf herkömmliche Weise, d.h, ohne Rippen, ausgebildet.

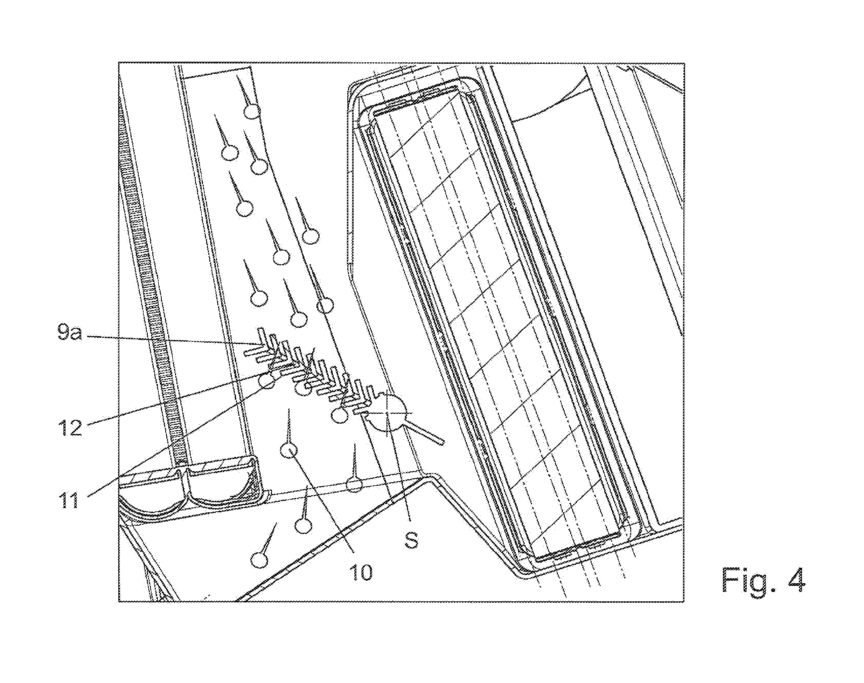

Um das sich an den oberen Rippen 11 (siehe Fig. 4) sammelnde und in Richtung Klappenfläche fließende Spritzwasser nach unten abführen zu können, ist eine Mehrzahl von Durchbrüchen 12 zwischen den Rippen 11 in der Klappenfläche vorgesehen, wobei zwischen zwei auf einer Seite der Klappenfläche angeordnete, benachbarten Rippen 11 jeweils mindestens ein Durchbruch 12 ausgebildet ist. Vorliegend sind acht schlitzförmige Durchbrüche 12 vorgesehen, welche in ihrer Länge zusammengesetzt etwa die Hälfte der Rippengesamtlänge entsprechen und gleichmäßig verteilt angeordnet sind, wobei an den Enden der Klappenfläche aus Stabilität- und Festigkeitsgründen jeweils Verbindungsstege vorgesehen sind. Die Breite der schlitzförmigen Durchbrüche 12 reicht vorliegend vom Endbereich der einen Rippe 11 bis zum Endbereich der benachbarten Rippe 11.

Die Funktion der Klappe 9a ist hierbei Folgende;

Im geschlossenen Zustand (siehe Fig. 3), in welchem sie sich im Wesentlichen außerhalb des Spritzwasserbereichs 10 befindet, verhindert die erste Klappe 9a in Verbindung mit der hinter dem Zuheizer 5 angeordneten dritten Klappe 9c ein direktes Durchströmen der vom Verdampfer 3 kommenden, kalten Luft durch den Heizer 4 und Zuheizer 5 in Richtung Mischraum 7, wobei die Hauptfunktion durch die dritte Klappe 9c übernommen wird. Die erste Klappe 9a dient hierbei insbesondere der Umlenkung des Luftstroms in Richtung Kaltluftbypass 6. Hierbei kann sich ggf. etwas Spritzwasser an den vardampferseitig angeordneten, "luftanströmseitigen" Rippen 11 sammeln und nach unten, d.h. in die durch die auf gegenüberliegenden Flächen der Klappenfläche angeordneten, "luflabströmseitigen" Rippen 11 gebildete V-förmige Nut, die durch Verbindungsstege unterbrochen ist, gelangen und sich hierin sammeln. Die Rippen 11 bilden somit Führungsstrukturen. Sammelt sich ausreichend Spritzwasser in der V-förmigen Nut, so werden durch das Spritzwasser die Durchbrüche 12 geschlossen, da in Folge des durch die Rippen gebildeten Umlenkurgen beruhigten Luftstroms in diesem Bereich nur sehr geringe Luftströrnungsgeschwindigkeiten vorherrschen und das sich unten ansammelnde Spritzwasser nicht über die vorliegend etwas weiter hochragenden heizerseitigen Rippen gefördert werden kann. Sind die Rippen 11 mit Spritzwasser gefüllt, so fließ sich ggf. weiter ansammelndes Spritzwasser auf der Verdampferseite der Klappe 9a nach unten hin ab, weiter über eine Schräge des Gehäuses 2 nach unten, in einen Bereich unterhalb des Verdampfers 3 und gelangt zu einem Kondenswasserablauf 13, von wo es nach außerhalb des Gehäuses 2 abgeführt wird, Somit verhindert sich sammelnde Spritzwasser in den Rippen 11 zusätzlich ein Durchströmen von Luft durch die Durchbrüche 12 der Klappe 9a in den Heizbereich, d.h, eine Restaufwärmung der kalten, vom Verdampfer 2 kommenden Luft kann sogar bei sich ausreichend sammelndem Spritzwasser sicher verhindort werden.

Im geöffneten Zustand der ersten Klappe 9a (siehe Fig. 2), ragt der mit Rippen 11 versehene Klappenflügel in den Spritzwasserbereich 10 hinein, während der kleinere, ohne Rippen und Durchbrüche ausgebildete Klappenflügel sich vom Spritzwasserbereich 10 entfernt und etwas in den Heizbereich hineinragt. Auf Grund der Strömungsrichtung der Luft, welche in Richtung Heizer 4 gerichtet ist, gelangt auch auf die nunmehr oben angeordneten (heizerseitigen) Rippen 11 Spritzwasser, welches entlang der Rippen 11 durch die Durchbrüche 12 und die unten angeordneten (verdarnpferseitigen) Rippen 11 nach unten geführt wird, von wo aus es nach unten auf die Schräge des Gehäuses 2 abtropfen kann. Ober die Schräge gelangt in einen Bereich unterhalb des Verdampfers 3 und gelangt zum Kondenswasserablauf 13, von wo es nach außerhalb des Gehäuses 2 abgeführt wird. Auf Grund der mittleren Luftströmungsrichtung der dem Warmluftpfad zugeführten Luft wird auf die oben angeordneten, heizerseitigen Rippen auch auch "luftabströmseitige" Rippen Bezug genommen, während die unten angeordneten, verdampferseitigen Rippen auch als "luftanströmseitige" Rippen bezeichnet werden.

Vorliegend wird durch eine geeignete Ausgestaltung der Klappenfläche im Bereich der Schwenkachse S, welche am Rand des Spritzwasserbereichss 10 angeordnet ist, ein Weiterströmen von sich sammelndem Spritzwasser in Richtung des kleineren, ohne Rippen ausgebildeten Klappenflügels verhindert. Das Spritzwasser, welches sich an der schwenkachsennachsten "luftanströmseitigen" Rippe außen sammelt, tropft - vorliegend auf Grund einer nicht näher dargestellten Tropfkante - von einem Bereich der Klappenfläche nahe der Schwenkachse S direkt in Richtung der Schräge des Gehäuses 2 ab, welche sich bis etwas über den Spritzwasserbereich 10 hinaus erstreckt, um ein sicheres, vollständiges Abführen von Spritzwasser in Richtung Kondenswasserablauf 13 und nicht in Richtung Heizbereich sicherzustellen.

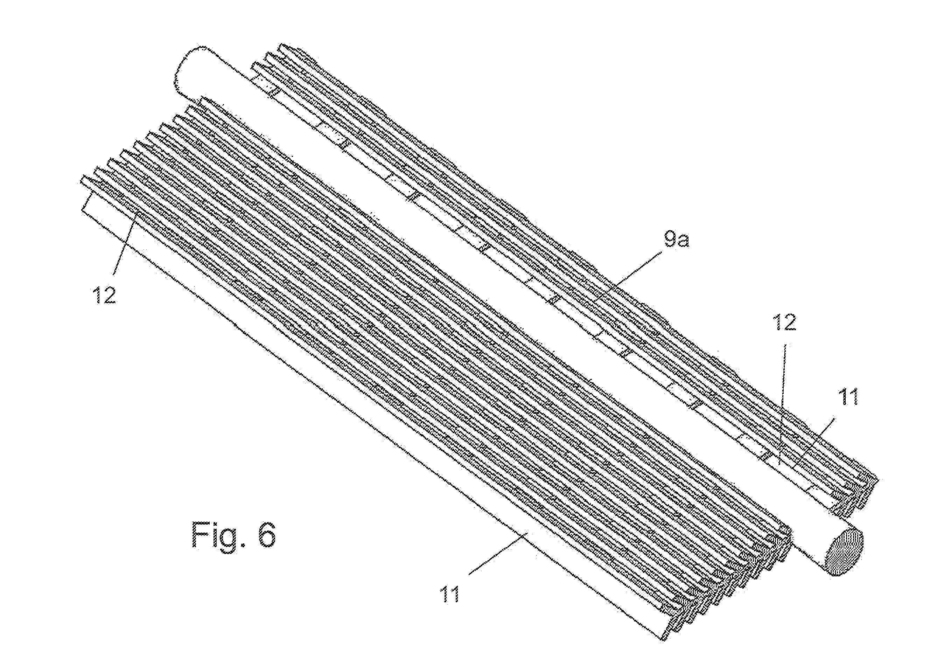

Gemäß dem zweiten Ausführungsbeispiel, das in Fig. 6 dargestellt ist, sind auf beiden Seiten der Schwenkachse S der ersten Klappe 9a parallel zueinander verlaufende Rippen 11 und zwischen den Rippen 11 angeordnete, schlitzförmige Durchbrüche 12 ausgebildet, welche durch Verbindungsstege voneinander getrennt sind. In diesem Fall kann auch der kürzere Klappenflügel im Spritzwasserbereich der Klimaanlage angeordnet sein und das Abführen von Spritzwasser unterstützen. Vorliegend sind jeweils neun Verbindungsstege und daher jeweils acht Durchbrüche in Schwenkachsenrichtung gleichmäßig verteilt vorgesehen. Die Funktion der Rippen und Durchbrüche entspricht hierbei bei beiden Klappenflügeln derjenigen des längeren, mit Rippen und Durchbrüchen versehenen Klappenflügels der zuvor beschriebenen Klappe, so dass hierauf nicht näher eingegangen wird.

Gemäß einem dritten, nicht in der Zeichnung dargestellten Ausführungsbeispiel ist eine Mehrzahl von schlitzförmigen Durchbrüchen in der rippenfrei ausgebildeten Klappenfläche vorgesehen, so dass das sich auf der Heizerseite oben sammelnde Spritzwasser wiederum durch die Klappenfläche nach unten gelangen und von der Klappenfläche abtropfen kann.

Alternativ können die Durchbrüche auch durch beliebige andere Gestalten, wie Insbesondere kreisförmige Öffnungen, gebildet sein. Die Durchbrüche müssen lediglich ausreichend groß sein, um ein Durchlassen von Spritzwasser zu ermöglichen. Die Verteilung kann in Reihen oder beliebig versetzt zueinander vorgesehen sein.

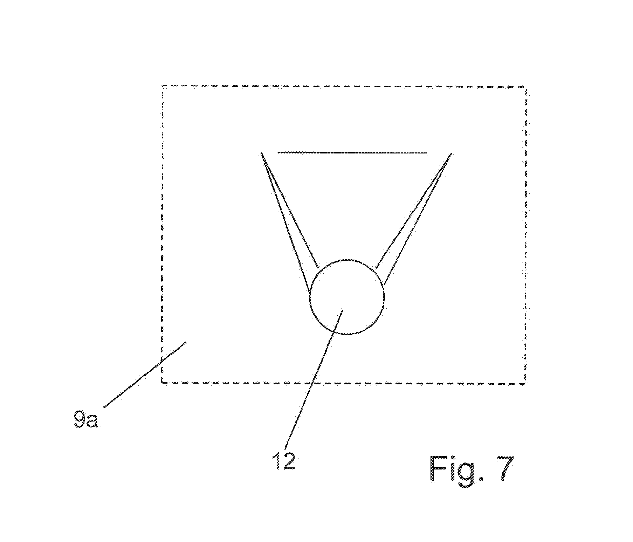

Gemäß einem vierten, in Fig. 7 ausschnittsweise dargestellten Ausführungsbeispiel einer Klappe 9a sind in Verbindung mit kreisförmigen Durchbrüchen 12 Führungsstrukturen in der heizerseitigen, oberen Fläche der Klappenfläche in Gestalt von V-förmig ausgebildete Vertiefungen vorgesehen, welche in den Durchbrüchen 12 enden, so dass sich auf der oberen Seite sammelndes Spritzwasser gezielt in Richtung der Durchbrüche 12 geführt wird. Auf der verdampferseitigen, unteren Fläche der Klappenfläche sind weitere, vorliegend nicht dargestellte Strukturen vorgesehen, welche ein Abtropfen des Spritzwassers fördern, bspw. in Gestalt von kleinen Vorsprüngen.

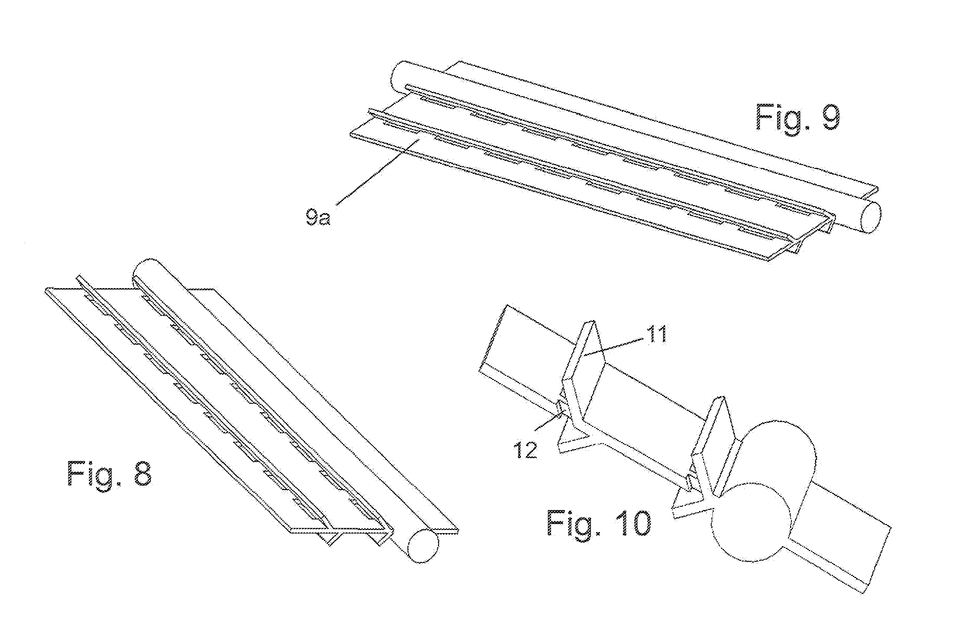

Die Figuren 8 bis 10 zeigen als fünftes Ausführungsbelspiel eine Klappe 9a, welche am größeren Klappenflügel auf jeder Fläche zwei Rippen aufweist, die in einem 45°-Winkel von der Klappenfläche abstehen, wobei die näher an der Schwenkachse liegenden Rippen 11 von einander gegenüberliegenden Bereichen der Klappenfläche ausgehen, während die von der Schwenkachse entfernteren Rippen 11 leicht versetzt angeordnet sind. Eine Mehrzahl von Durchbrüchen 12 sind in der Klappenfläche ausgebildet, wobei die Durchbrüche vorliegend etwas schräg verlaufend ausgebildet sind (siehe Fig. 10) und sich ihre Orientierung und Positionierung nach der oben dargestellten Rippe richtet.

Gemäß dem sechsten Ausführungsbeispiel entfallen die von der Schwenkachse entfernteren Rippen und Durchbrüche, d.h. es ist nur ein Paar Rippen 11 mit mehreren entlang der Längserstreckung der Rippen verteil angeordneten schlitzartigen Durchbrüchen 12 in der Klappenfläche der Klappe 9a vorgesehen. Auch in diesem Fall ist die Klappe 9a derart im Klimaanlagengehäuse angeordnet, dass sie sich mit ihrem langen Klappenflügel in den Spritzwasserbereich 10 erstreckt, wenn sie geöffnet ist. Hierbei dient die oben angeordnete Rippe 11, welche auf der Seite der langen Klappenfläche in Bezug auf die Schwenkachse der Klappe 9a angeordnet ist, dem Auffangen und Umleiten des sich auf der Oberseite des langen Klappenflügels sammelnden Spritzwassers in Richtung der Durchbrüche 12, während die untere Rippe 11, welche in gleicher Höhe wie die obere Rippe 11 angeordnet ist, das durch die Durchbrüche 12 fließende Spritzwasser weiterführt in Richtung des schräg verlaufenden Gehäusebereichs, welcher das Spritzwasser zum Kondensatablauf unterhalb des Verdampfers führt, und von deren Ende das Spritzwasser in Richtung des schräg verlaufenden Gehäusebereichs abtropft. Vorlegend sind die beiden Rippen 11 wiederum in einem90°-Winkel zueinander und jeweils in einem 46°-Winkel zur Klappenfläche des längeren Klappenflügels angeordnet.

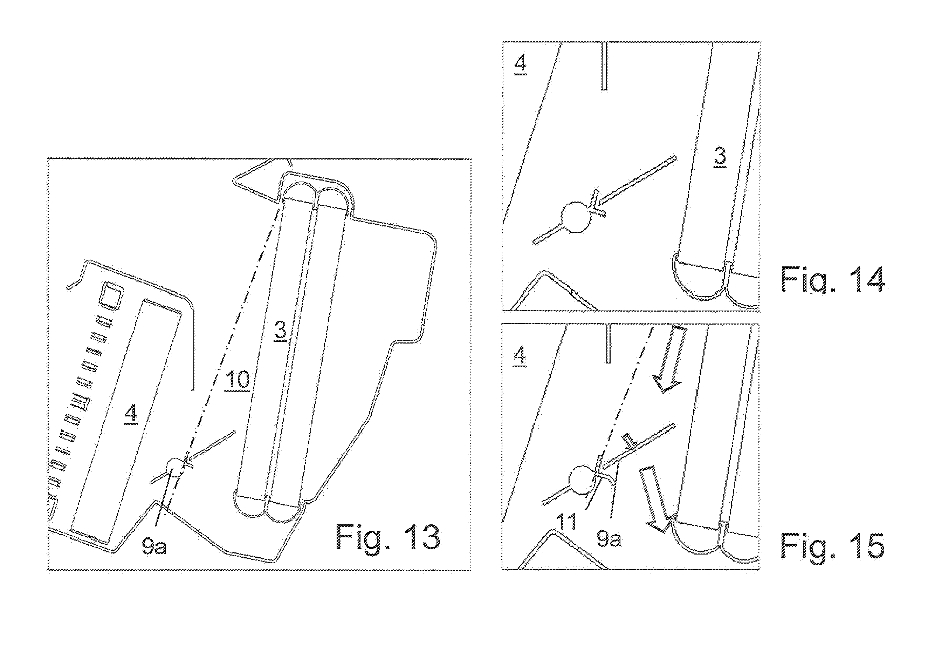

Fig. 15 zeigt eine Variante des sechsten Ausführungsbeispiels, gemäß welcher die als Abtropfkante dienende untere Rippe sich weiter öffnet.

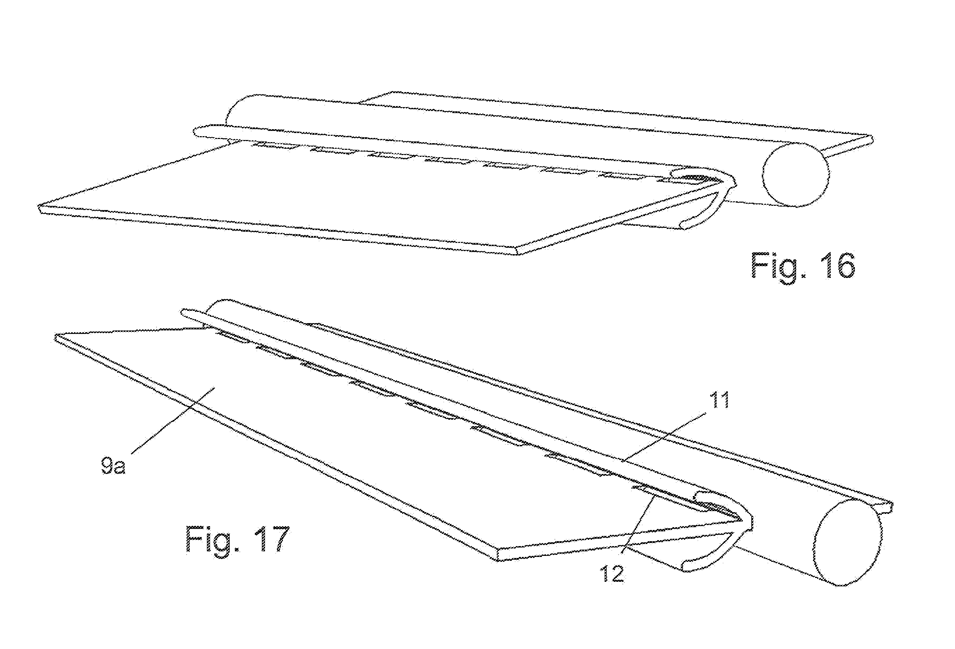

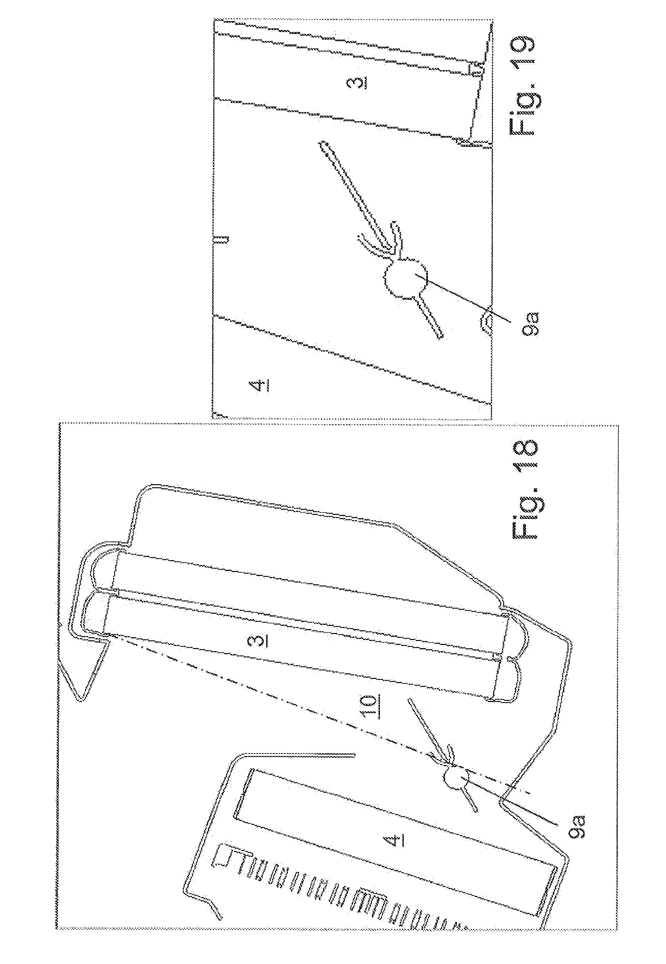

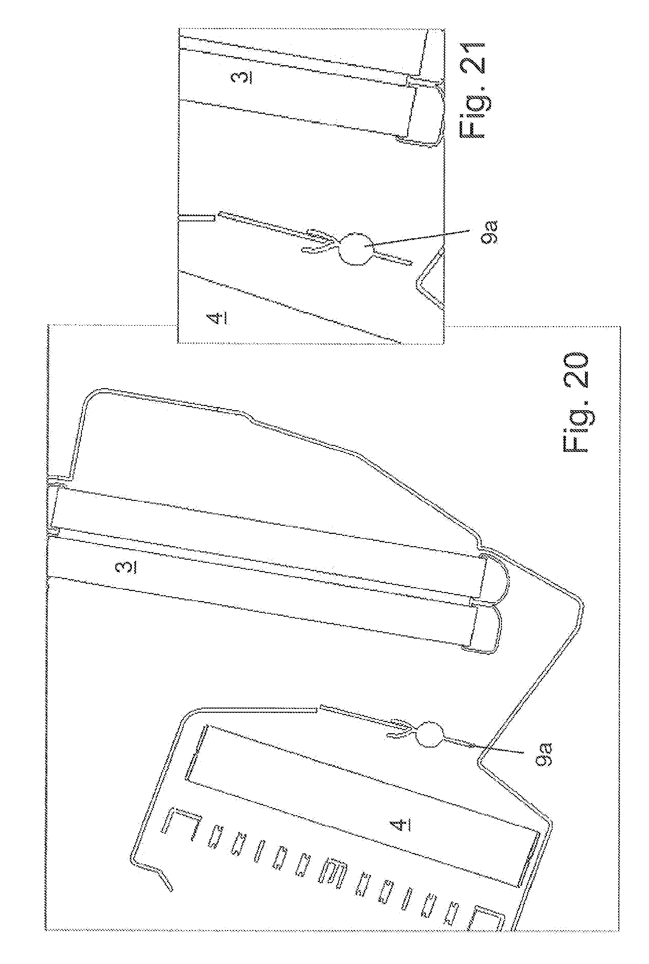

In den Figuren 16 bis 21 ist als siebtes Ausführungsbeispiel einer Klappe 9a eine Klappe vorgesehen, welche im Wesentlichen der Klappe des sechsten Ausführungsbeispiels entspricht, jedoch an Stelle von starren Rippen elastische Rippen 11 aufweist. Die Rippen 11 sind zudem leicht versetzt angeordnet. Die Figuren 18 und 19 zeigen hierbei eine geöffnete Klapperstellung, in welcher der längere Klappenflügel, an welchem die Rippen 11 angeordnet sind, in den Spritzwasserbereich 10 des Verdampfers 3 ragt. In Folge des vom Verdampfer 3 in Richtung Heizer 4 strömenden Luftstroms wird Spritzwasser in Richtung Heizer 4 mitgeführt, wobei es in Folge der Schwerkraft nach unten sinkt, wo es sich entweder direkt am Gehäuse oder an der Klappe 9a sammelt und weiter nach unten fließt. Die Funktion der elastischen Rippen 11, welche u.a. auf Grund des Luftstroms geöffnet sind, entspricht hierbei derjenigen der zuvor beschriebenen starren Rippen. Wird die Klappe 9a jedoch geschlossen, wie in den Figuren 20 und 21 dargestellt, so strömt der Luftstrom entlang der äußeren, in der Zeichnung rechts dargestellten Klappenfläche, wodurch vorliegend die elastische Rippe 11, welche auf der Verdampferseite angeordnet ist, in Anlage an die Klappenfläche gedrückt wird, so dass der Luftstrom kaum durch die Rippe 11 beeinträchtigt wird. Die heizerseitige Rippe 11 bleibt unbeeinflusst.

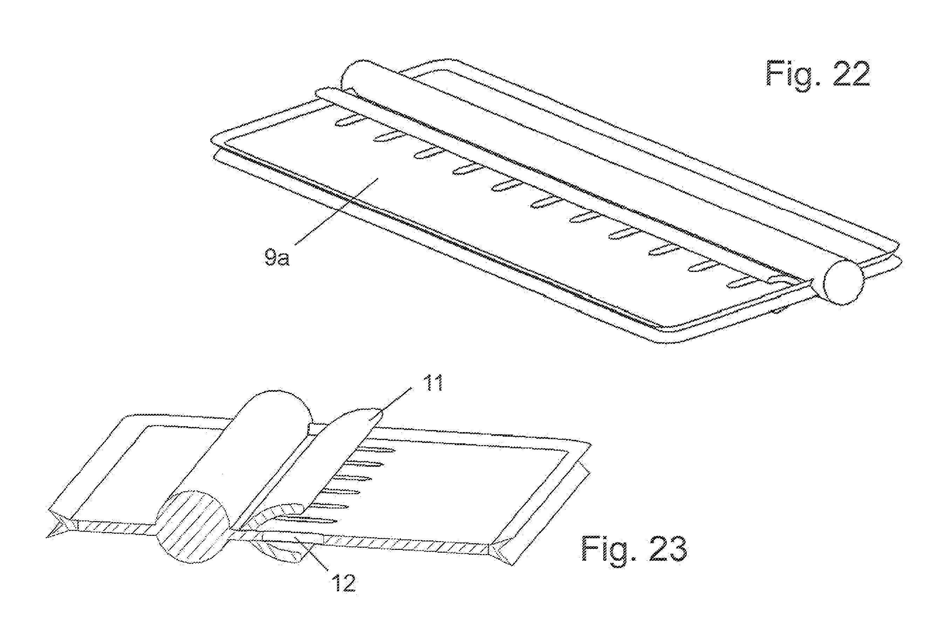

Die Figuren 22 und 23 zeigen eine Variante des siebten Ausführungsbeispiels, gemäß der die Klappe 9a einen außen umlaufenden, die Klappe 9a gegenüber einer ebenen Wandfläche des Gehäuses abdichtenden doppellippenartig ausgebildeten Rand aufweist. Ferner sind die Durchbrüche 12 nicht parallel zur Längserstreckung der Rippen 11 angeordnet, sondern sind durch sich senkrecht zur Schwenkachse der Klappe 9a erstreckende Schlitze gebildet. Hierbei entspricht die Schlitzlänge etwa der Rippenbreite, so dass bei anliegender elastischer Rippe 11 die Durchbrüche 12 im Wesentlichen verdeckt sind.

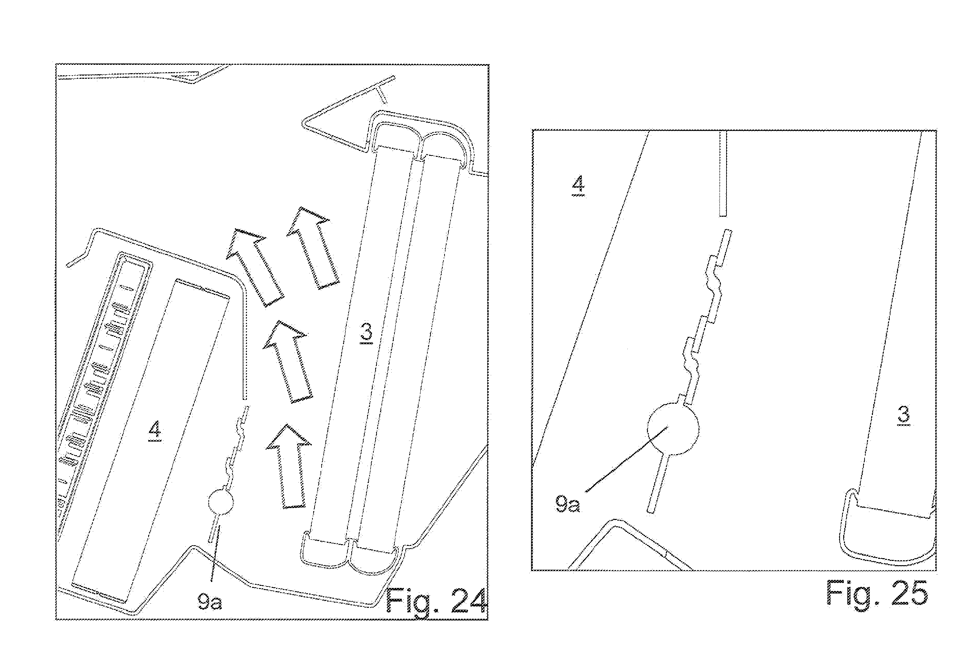

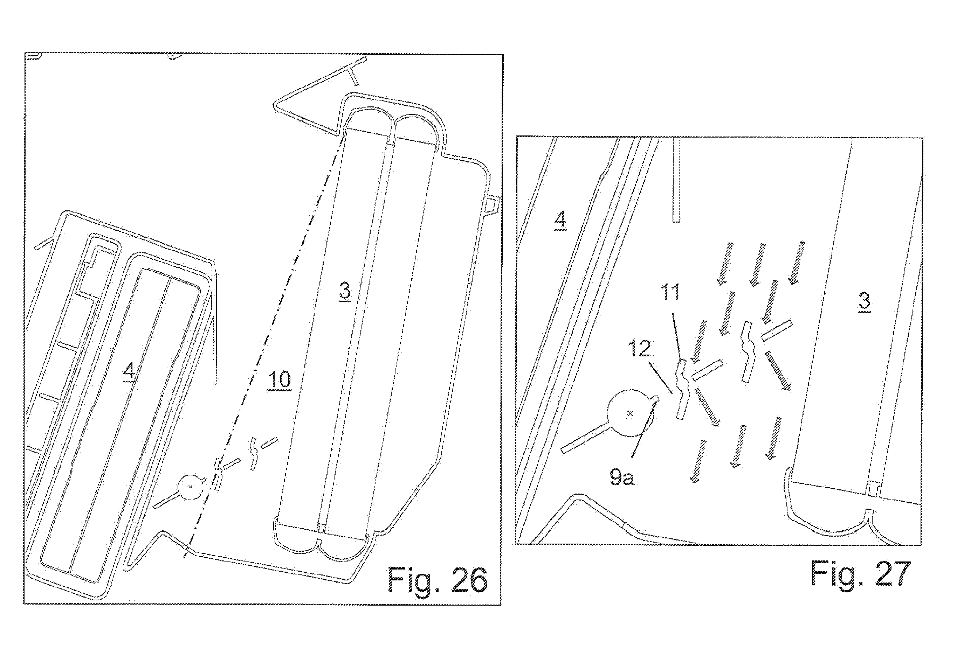

Gemäß dem in den Figuren 24 bis 29 dargestellten achten Ausführungsbeispiel sind die Rippen 11 durch vorliegend zwei verschwenkbare Klappenbereiche gebildet, welche in den Durchbrüchen 12 angeordnet sind. Die Klappenbereiche sind um in der Klappenfläche liegende Schwenkachsen verschwenkbar, wobei die Klappenbereiche derart gelagert sind, dass sie bei geöffneter Klappe 9a offen und bei geschlossener Klappe 9a geschlossen sind. Auf diese Weise wird ein Luftstrom vom Verdampfer 3 in Richtung Kaltluftbypass zum Heizer 4, wie in Fig. 24 durch Pfeile angedeutet, nicht durch die Rippen 11 beeinträchtigt, da dieselben bei dieser Klappenstellung in die Klappenfläche integriert angeordnet sind und die Durchbrüche 12 verschließen. Im Falle eines reinen Heizbetriebs oder eines Mischbetriebs ist die Klappe 9a geöffnet und die Klappenbereiche dienen entsprechend den vorstehend beschriebenen Ausführungsbeispielen der Durchleitung von Spritzwasser, damit dieses nicht in Richtung Heizer 4 gelangt.

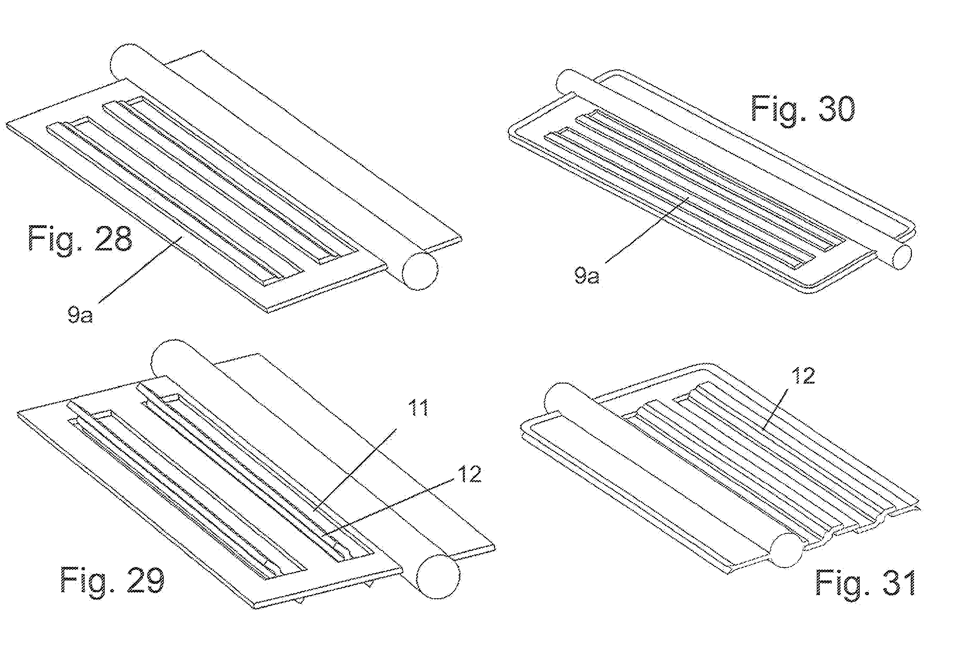

Figuren 30 und 31 zeigen eine Variante des achten Ausführungsbeispiels einer Klappe 9a mit einem außen umlaufenden, die Klappe 9a gegenüber einer ebenen Wandfläche des Gehäuses abdichtenden doppellippenartig ausgebildeten Rand.

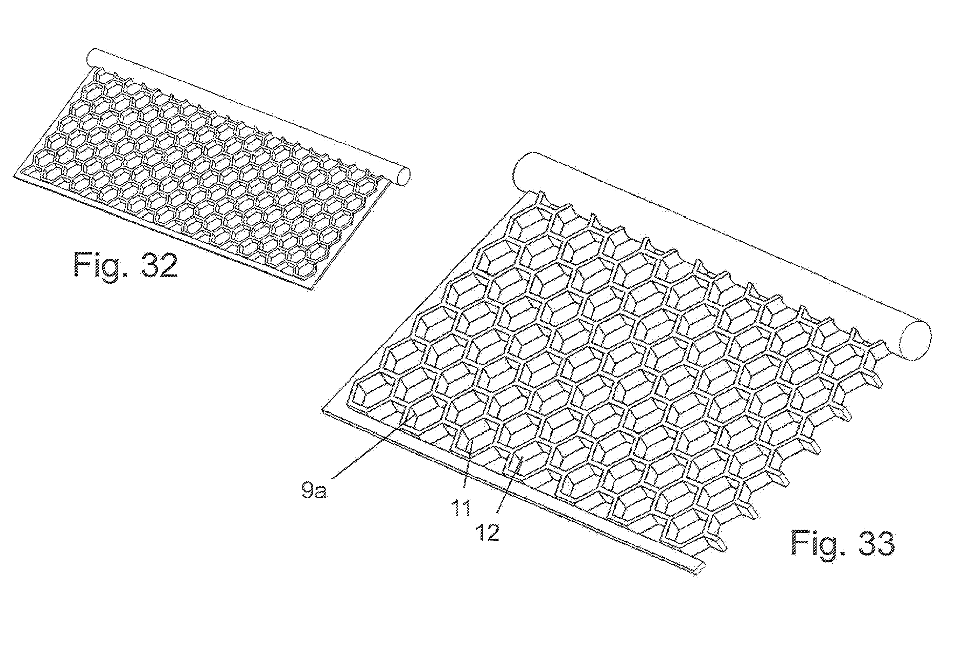

Die Figuren 32 und 33 zeigen als neuntes Ausführungsbeispiel eine bienenwabenartig ausgebildete Klappe 9a, wobei die Bienenwaben die Rippen 11 und die Öffnungen der Bienenwaben die Durchbrüche 12 für die Durchführung des von den Rippen 11 gesammelten Spritzwassers bilden.

Beliebige andere Führungsstrukturen können an den Flächen der Klappenfläche ausgebildet sein, um das Spritzwasser in Richtung der Durchbrüche zu leiten und um ein Abtropfen von Spritzwasser zu unterstützen.

### Bezugszeichenliste

1 Klimaanlage
2 Gehäuse
3 Verdampfer
4 Heizer
5 Zuheizer
6 Kaltluftbypass
7 Mischraum
8 Klappe
9 Klappe
9a erste Klappe
9b zweite Klappe
9c dritte Klappe
10 Spritzwasserbereich
11 Rippe
12 Durchbruch
13 Kondenswasssrablauf

S Schwenkachse

## Patentansprüche

1. Klappe aufweisend eine Schwenkachse (S) und mindestens eine Klappenfläche, die sich von der Schwenkachse (S) aus erstreckt und zwei einander gegenüberliegende Flächen hat, **dadurch gekennzeichnet, dass** die Klappe (9a) mindestens einen Durchbruch (12) aufweist, welcher einen Verbindungsweg zwischen den beiden Klappenflächen bildet.

2. Klappe nach Anspruch 1, **gekennzeichnet durch** eine Mehrzahl von Durchbrüchen (12) vorgesehen ist.

3. Klappe nach Anspruch 2, **gekennzeichnet durch** mindestens eine Führungsstruktur, die zumindest in einem Teilbereich einer der einander gegenüberliegenden Flächen der Klappenfläche angeordnet ist, wobei die Führungsstruktur dazu dient, sich sammelnde Flüssigkeit in Richtung der Durchbrüche (12) zu führen.

4. Klappe nach Anspruch 3, **gekennzeichnet durch** mindestens eine Rippe (11), welche eine Führungsstruktur bildet und an einer der einander gegenüberliegenden Flächen der Klappenfläche angeordnet ist.

5. Klappe nach Anspruch 4, **dadurch gekennzeichnet, dass** eine Mehrzahl von Führungsstrukturen bildender Rippen (11) vorgesehen ist, die zumindest in einem Teilbereich einer der einander gegenüberliegenden Flächen der Klappenfläche angeordnet sind, wobei die Durchbrüche (12) zwischen den Rippen (11) angeordnet sind.

6. Klappe nach Anspruch 5, **dadurch gekennzeichnet, dass** auf einander gegenüberliegenden Flächen der Klappenfläche in mindestens einem Bereich eine Mehrzahl von Rippen (11) vorgesehen ist.

7. Klappe nach Anspruch 6 oder 7, **dadurch gekennzeichnet, dass** die Rippen (11) Parallel zueinander und schräg zur Klappenfläche verlaufend angeordnet sind.

8. Klappe nach einem der Ansprüche 5 bis 7, **dadurch gekennzeichnet, dass** die Rippen (11) fischgrätenartig in einem Winkel von 20° bis 70°, insbesondere 45°+/- 10°, von der Klappenfläche abstehen.

9. Klappe nach einem der vorhergehenden Ansprüche, **dadurch gekennzeichnet, dass** die Klappe (9a) zweiflügelig mit zwei unterschiedlich langen Klappenflügeln und zwischen den Klappenflügeln verlaufender Schwenkachse (S) ausgebildet ist, wobei zumindest an einem der Klappenflügel, insbesondere am größeren Klappenflügel, Durchbrüche (12) vorgesehen sind.

10. Klappe nach einem der vorhergehenden Ansprüche, **dadurch gekennzeichnet, dass** die Klappe (9a) zweiflügelig mit zwei unterschiedlich langen Klappenflügeln und zwischen den Klappenflügeln verlaufender Schwenkachse (S) ausgebildet ist, wobei zumindest an einem der Klappenflügel, insbesondere am größeren Klappenflügel, Rippen (11) vorgesehen sind, welche sich schräg zur Klappenfläche weg von der Schwenkachse (S) der Klappe (9a) erstrecken.

11. Klappe nach einem der vorhergehenden Ansprüche, **dadurch gekennzeichnet, dass** die Klappe (9a) mindestens eine Führungsstruktur aufweist, welche durch eine elastische Rippe (11) gebildet ist, und/oder welche durch eine in die Klappenfläche integrierte Klappe gebildet ist,

12. Klimaanlage aufweisend mindestens einen Verdampfer (3), mindestens einen Heizer (4), **gekennzeichnet durch** mindestens eine Klappe nach einem der vorhergehenden Ansprüche, wobei die Klappe im Warmluftpfad zwischen Verdampfer (3) und Heizer (4) angeordnet ist.

13. Klimaanlage nach Anspruch 12, **dadurch gekennzeichnet, dass** die Klappe (9a) zumindest in einem Betriebszustand in einen Spritzwasserbereich (10) des Verdampfers (3) ragt.

14. Klimaanlage nach Anspruch 13, **dadurch gekennzeichnet, dass** die Klappe (9a) ausschließlich mit Bereichen, welche mit den Durchbrüchen (12) versehen sind, in den Spritzwasserbereich (10) des Verdampfers (3) ragt.

15. Klimaanlage nach Anspruch 13 oder 14, **dadurch gekennzeichnet, dass** die Klappe (9a) ausschließlich mit Bereichen, welche mit Führungsstrukturen, insbesondere mit Rippen (11), versehen sind, in den Spritzwasserbereich (10) des Verdampfers (3) ragt, wobei die Führungsstrukturen in jeder Klappenstellung, in welcher sie sich im Spritzwasserbereich (10) befinden, derart angeordnet sind, dass ein Abfließen entlang der Führungsstrukturen, Durchströmen der Durchbrüche (12), Weiterfließen entlang auf der anderen Fläche der Klappenfläche angeordneten Führungsstrukturen und Abtropfen von Spritzwasser nach unten möslisch ist.
